# EUROPEAN PATENT APPLICATION

(11) **EP 4 848 888 A1**
(43) Date of publication of application: **02.12.2026**
(21) Application number: 24919868.0
(22) Date of filing: 15.11.2024
(51) Int. Cl.: H04W 80/06

(54) **SIGNAL TRANSMISSION METHOD AND DEVICE**

(30) Priority: 23.01.2024 CN 202410096188
(71) Applicant: Datang Mobile Communications Equipment Co., Ltd., Beijing 100085 (CN)
(72) Inventor: SHI, Jie, Beijing 100085 (CN); FU, Jing, Beijing 100085 (CN); LIANG, Jing, Beijing 100085 (CN)
(74) Representative: Maiwald GmbH
(86) International application number: PCT/CN2024/132202
(87) International publication number: WO 2025/156788

(57) **Abstract**

The present disclosure relates to the technical field of communications, and provides a signal transmission method and device. The method of the embodiments of the present disclosure comprises: on the basis of priority information of cells to be woken up, selecting a target cell to be woken up from among the plurality of said cells; and on the basis of wake-up signal configuration information, sending a wake-up signal to said target cell.

## Description

The present disclosure claims priority to Chinese Patent Application No. 202410096188.8, filed on January 23, 2024, entitled "SIGNAL TRANSMISSION METHOD AND DEVICE", the disclosures of which are incorporated herein by reference in their entirety.

### TECHNICAL FIELD-

The present disclosure relates to the field of communication technologies, and particularly relates to a signal transmission method and a signal transmission device.

### BACKGROUND

To reduce network energy consumption, a network-side energy saving mechanism is introduced into wireless communication systems. The Network Energy Saving (NES) technology defined in R19 introduces an on-demand Synchronization Signal/PBCH Block (SSB)/System Information Block 1 (SIB1) mechanism. Specifically, a network does not transmit SSB or SIB1 messages in an energy-saving mode, and only transmits SSB or SIB1 messages when there is an access demand. To notify the network of User Equipment (UE)'s access or camping demands, the UE may transmit a wake-up signal to a base station, so that the base station can immediately transmit SSB signals or SIB1 messages. However, when the UE can transmit wake-up signals for multiple cells, the UE can only randomly wake up one cell and cannot selectively wake up a designated cell.

### SUMMARY

An objective of the present disclosure is to provide a signal transmission method and a signal transmission device, so as to solve the problem of how a UE selects a cell to be woken up when the UE can transmit wake-up signals for multiple cells.

To achieve the above objective, a signal transmission method performed by a terminal is provided in the embodiments of the present disclosure. The method includes: selecting a target to-be-woken-up cell from a plurality of to-be-woken-up cells according to to-be-woken-up cell priority information; transmitting a wake-up signal to the target to-be-woken-up cell according to wake-up signal configuration information.

In some embodiments, the method further includes: obtaining the to-be-woken-up cell priority information according to at least one of pre-configuration information, one or more system messages of a current camping cell, one or more radio resource control (RRC) messages of the current camping cell, one or more system messages of historical camping cells, and one or more RRC messages of the historical camping cells; wherein the one or more RRC messages are one or more RRC messages obtained when the terminal is in a connected state.

In some embodiments, the to-be-woken-up cell priority information is associated with at least one of the following items: a frequency level; a cell level; one or more measurement signals corresponding to one or more cells; location sorting information of one or more wake-up signal configurations; channel quality information of one or more cells.

In some embodiments, selecting the target to-be-woken-up cell from the plurality of to-be-woken-up cells according to the to-be-woken-up cell priority information includes: selecting M to-be-woken-up cells with the highest to-be-woken-up cell priority from the plurality of to-be-woken-up cells, wherein M is a positive integer; determining the target to-be-woken-up cell according to the M to-be-woken-up cells.

In some embodiments, determining the target to-be-woken-up cell according to the M to-be-woken-up cells includes:
when M equals 1, taking the M to-be-woken-up cell as the target to-be-woken-up cell; or when M is greater than 1, randomly selecting one cell from the M to-be-woken-up cells as the target to-be-woken-up cell, or selecting one cell from the M to-be-woken-up cells as the target to-be-woken-up cell based on terminal implementation, or selecting the to-be-woken-up cell with optimal channel quality from the M to-be-woken-up cells as the target to-be-woken-up cell; wherein the target to-be-woken-up cell satisfies a cell selection condition or a cell reselection condition.

In some embodiments, after transmitting the wake-up signal to the target to-be-woken-up cell, the method further includes: starting a first timer, the first timer being configured to determine whether the target to-be-woken-up cell fails to be woken up.

In some embodiments, the method further includes: determining that the target to-be-woken-up cell fails to be woken up if a system information block 1 (SIB1) or a synchronization signal block (SSB) transmitted by the target to-be-woken-up cell is not detected within a running duration of the first timer.

In some embodiments, the method further includes: when it is determined that the target to-be-woken-up cell fails to be woken up, selecting a to-be-woken-up cell other than the target to-be-woken-up cell from the plurality of to-be-woken-up cells to execute a wake-up procedure.

In some embodiments, the method further includes: stopping the first timer if a SIB1 or a SSB transmitted by the target to-be-woken-up cell is detected within the running duration of the first timer.

In some embodiments, the method further includes: within a preset time period, refraining from determining, as a to-be-woken-up cell, a cell that fails to be woken up, and/or refraining from transmitting a wake-up signal to a cell that fails to be woken up.

A signal transmission method performed by a first network-side device is further provided in the embodiments of the present disclosure. The method includes: obtaining to-be-woken-up cell priority information, the to-be-woken-up cell priority information being used by a terminal to select a target to-be-woken-up cell from a plurality of to-be-woken-up cells; transmitting the to-be-woken-up cell priority information to the terminal.

In some embodiments, before obtaining the to-be-woken-up cell priority information, the method further includes: transmitting a first request message to a second network-side device, the first request message being used to request transmission of the to-be-woken-up cell priority information, and the second network-side device being a neighboring base station of the first network-side device.

In some embodiments, the method further includes: when the to-be-woken-up cell priority information is configured by the first network-side device itself, transmitting the to-be-woken-up cell priority information to a second network-side device, the second network-side device being a neighboring base station of the first network-side device.

In some embodiments, the to-be-woken-up cell priority information is associated with at least one of the following items: a frequency level; a cell level; one or more measurement signals corresponding to one or more cells; location sorting information of one or more wake-up signal configurations; channel quality information of one or more cells.

A signal transmission method performed by a second network-side device is provided in the embodiments of the present disclosure. The method includes: transmitting to-be-woken-up cell priority information to a first network-side device, or receiving to-be-woken-up cell priority information transmitted by the first network-side device; wherein the to-be-woken-up cell priority information is used by a terminal to select a target to-be-woken-up cell from a plurality of to-be-woken-up cells.

In some embodiments, before transmitting the to-be-woken-up cell priority information to the first network-side device, the method further includes: receiving a first request message transmitted by the first network-side device, the first request message being used to request transmission of the to-be-woken-up cell priority information.

In some embodiments, after receiving the to-be-woken-up cell priority information transmitted by the first network-side device, the method further includes: transmitting a response message to the first network-side device.

In some embodiments, the response message includes acknowledgement information for the to-be-woken-up cell priority information or suggestion information for the to-be-woken-up cell priority information.

In some embodiments, the to-be-woken-up cell priority information is associated with at least one of the following items: a frequency level; a cell level; one or more measurement signals corresponding to one or more cells; location sorting information of one or more wake-up signal configurations; channel quality information of one or more cells.

A signal transmission device is further provided in the embodiments of the present disclosure. The device includes: a memory, a transceiver and a processor; wherein the memory is configured to store computer programs; the transceiver is configured to transmit and receive data under control of the processor; the processor is configured to read the computer programs stored in the memory and perform the following operations: selecting a target to-be-woken-up cell from a plurality of to-be-woken-up cells according to to-be-woken-up cell priority information; transmitting a wake-up signal to the target to-be-woken-up cell according to wake-up signal configuration information.

In some embodiments, the processor is further configured to perform the following steps: obtaining the to-be-woken-up cell priority information according to at least one of pre-configuration information, one or more system messages of a current camping cell, one or more radio resource control (RRC) messages of the current camping cell, one or more system messages of historical camping cells, and one or more RRC messages of the historical camping cells; wherein the one or more RRC messages are one or more RRC messages obtained when the terminal is in a connected state.

In some embodiments, the to-be-woken-up cell priority information is associated with at least one of the following items: a frequency level; a cell level; one or more measurement signals corresponding to one or more cells; location sorting information of one or more wake-up signal configurations; channel quality information of one or more cells.

In some embodiments, the processor is further configured to perform the following steps: selecting M to-be-woken-up cells with the highest to-be-woken-up cell priority from the plurality of to-be-woken-up cells, where M is a positive integer; when M equals 1, taking the M to-be-woken-up cell as the target to-be-woken-up cell; or when M is greater than 1, randomly selecting one cell from the M to-be-woken-up cells as the target to-be-woken-up cell, or selecting one cell from the M to-be-woken-up cells as the target to-be-woken-up cell based on terminal implementation, or selecting the to-be-woken-up cell with optimal channel quality from the M to-be-woken-up cells as the target to-be-woken-up cell; wherein the target to-be-woken-up cell satisfies a cell selection condition or a cell reselection condition.

In some embodiments, the processor is further configured to perform the following step: starting a first timer, the first timer being configured to determine whether the target to-be-woken-up cell fails to be woken up.

In some embodiments, the processor is further configured to perform the following step: determining that the target to-be-woken-up cell fails to be woken up if a system information block 1 (SIB1) or a synchronization signal block (SSB) transmitted by the target to-be-woken-up cell is not detected within a running duration of the first timer.

In some embodiments, the processor is further configured to perform the following step: when it is determined that the target to-be-woken-up cell fails to be woken up, selecting a to-be-woken-up cell other than the target to-be-woken-up cell from the plurality of to-be-woken-up cells to execute a wake-up procedure.

In some embodiments, the processor is further configured to perform the following step: stopping the first timer if a SIB1 or a SSB transmitted by the target to-be-woken-up cell is detected within a running duration of the first timer.

In some embodiments, the processor is further configured to perform the following step: within a preset time period, refraining from determining, as a to-be-woken-up cell, a cell that fails to be woken up, and/or refraining from transmitting a wake-up signal to a cell that fails to be woken up.

A signal transmission device is further provided in the embodiments of the present disclosure. The device includes: a memory, a transceiver and a processor; wherein the memory is configured to store computer programs; the transceiver is configured to transmit and receive data under control of the processor; wherein the processor is configured to read the computer programs stored in the memory and perform the following operations:
obtaining to-be-woken-up cell priority information, the to-be-woken-up cell priority information being used by a terminal to select a target to-be-woken-up cell from a plurality of to-be-woken-up cells; transmitting the to-be-woken-up cell priority information to the terminal.

In some embodiments, the processor is further configured to perform the following step:
transmitting a first request message to a second network-side device, the first request message being used to request transmission of the to-be-woken-up cell priority information, and the second network-side device being a neighboring base station of the first network-side device.

In some embodiments, the processor is further configured to perform the following step: when the to-be-woken-up cell priority information is configured by the first network-side device itself, transmitting the to-be-woken-up cell priority information to a second network-side device, the second network-side device being a neighboring base station of the first network-side device.

A signal transmission device is further in the embodiments of the present disclosure. The device includes: a memory, a transceiver and a processor; wherein the memory is configured to store computer programs; the transceiver is configured to transmit and receive data under control of the processor; the processor is configured to read the computer programs stored in the memory and perform the following operations: transmitting to-be-woken-up cell priority information to a first network-side device, or receiving to-be-woken-up cell priority information transmitted by the first network-side device; wherein the to-be-woken-up cell priority information is used by a terminal to select a target to-be-woken-up cell from a plurality of to-be-woken-up cells.

In some embodiments, the processor is further configured to perform the following step: receiving a first request message transmitted by a first network-side device, the first request message being used to request transmission of the to-be-woken-up cell priority information.

A processor-readable storage medium is further provided in the embodiments of the present disclosure. The processor-readable storage medium storing a computer program, the computer program being operable to cause a processor to execute steps of the signal transmission methods according to the above.

The above technical solutions of the present disclosure bring at least the following beneficial effects:
in the embodiments of the present disclosure, a target to-be-woken-up cell is selected from a plurality of to-be-woken-up cells according to to-be-woken-up cell priority information; a wake-up signal is transmitted to the target to-be-woken-up cell according to wake-up signal configuration information. Therefore, a to-be-woken-up cell with higher priority can be selected as the target to-be-woken-up cell based on the to-be-woken-up cell priority information. The above solution realizes the purpose of selecting an appropriate target to-be-woken-up cell to perform a wake-up procedure, thereby effectively avoiding access failure or camping failure caused by improper wake-up procedures, improving the success rate of subsequent access, and reducing power consumption of the terminal.

### BRIEF DESCRIPTION OF THE DRAWINGS

FIG. 1 is a structural diagram of a network system applicable to some embodiments of the present disclosure;
FIG. 2 is a first schematic flowchart of a signal transmission method according to some embodiments of the present disclosure;
FIG. 3 is a first schematic interaction diagram of a signal transmission method according to some embodiments of the present disclosure;
FIG. 4 is a second schematic interaction diagram of a signal transmission method according to some embodiments of the present disclosure;
FIG. 5 is a second schematic flowchart of a signal transmission method according to some embodiments of the present disclosure;
FIG. 6 is a third schematic flowchart of a signal transmission method according to some embodiments of the present disclosure;
FIG. 7 is a third schematic interaction diagram of a signal transmission method according to some embodiments of the present disclosure;
FIG. 8 is a first structural block diagram of a signal transmission device according to some embodiments of the present disclosure;
FIG. 9 is a second structural block diagram of a signal transmission device according to some embodiments of the present disclosure;
FIG. 10 is a first schematic module diagram of a signal transmission device according to some embodiments of the present disclosure;
FIG. 11 is a second schematic module diagram of a signal transmission device according to some embodiments of the present disclosure;
FIG. 12 is a third schematic module diagram of a signal transmission device according to some embodiments of the present disclosure.

### DETAILED DESCRIPTION

The technical solutions in the embodiments of the present disclosure will be clearly and completely described below with reference to the accompanying drawings of the embodiments of the present disclosure. Obviously, the described embodiments are partial embodiments of the present disclosure, rather than all embodiments. All other embodiments obtained by a person of ordinary skill in the art without creative labor based on the embodiments of the present disclosure shall fall within the protection scope of the present disclosure.

The terms "first", "second" and the like in the specification and claims of the present disclosure are used to distinguish similar objects, and are not intended to describe a specific sequence or order. It should be understood that terms labeled in such manner may be interchanged under appropriate circumstances, so that the embodiments of the present disclosure described herein may be implemented in an order different from the illustrated or described order. In addition, the terms "include", "have" and any variants thereof are intended to cover non-exclusive inclusion. For example, a process, method, system, product or device containing a series of steps or units is not limited to the clearly listed steps or units, and may further include other steps or units not explicitly listed or inherent to such process, method, product or device.

In the embodiments of the present disclosure, the term "and/or" describes an association relationship between associated objects, representing three possible relationships. For example, A and/or B may represent: A exists alone, A and B exist simultaneously, and B exists alone. The slash "/" generally represents an "or" relationship between associated objects. In the embodiments of the present disclosure, the term "a plurality of" means two or more, and other quantifiers follow the same rule.

In the embodiments of the present disclosure, words such as "exemplary" or "for example" are used to represent examples, illustrations or descriptions. Any embodiment or design scheme described as "exemplary" or "for example" in the embodiments of the present disclosure shall not be interpreted as a preferred or superior embodiment or design scheme compared with others. Instead, the use of words such as "exemplary" or "for example" aims to present related concepts in a specific manner.

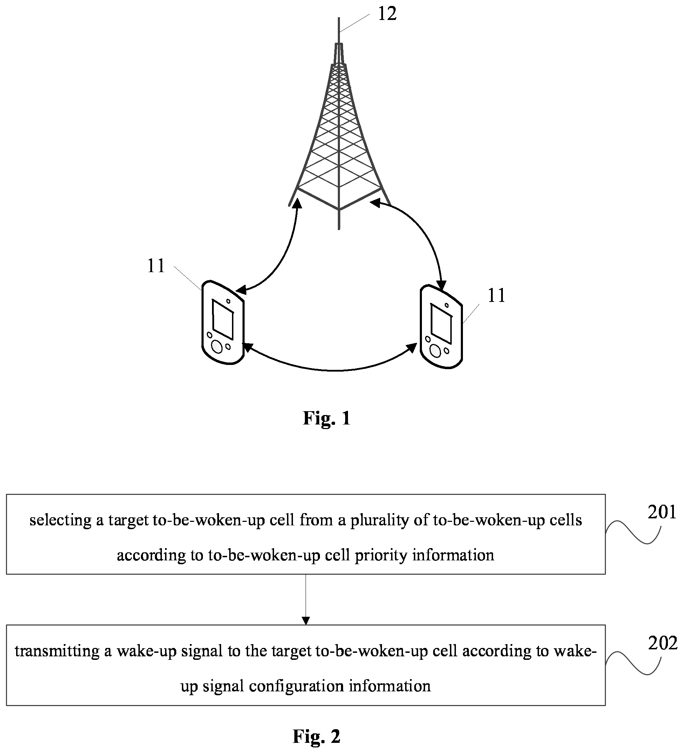

FIG. 1 is a block diagram of a wireless communication system applicable to the embodiments of the present disclosure. The wireless communication system includes a terminal device 11 and a network-side device (or a network device) 12. The terminal device 11 may also be referred to as a terminal or User Equipment (UE). It should be noted that the embodiments of the present disclosure do not limit the specific type of the terminal 11. The network-side device 12 may be a base station or a core network device. It should be noted that the embodiments of the present disclosure take only a base station in an NR system as an example, but do not limit the specific type of the base station.

To enable persons skilled in the art to better understand the embodiments of the present disclosure, relevant preamble explanations are provided as follows:

### (1) Functions of SSB

A SSB carries basic synchronization information of a base station. A UE obtains basic synchronization information and downlink channel quality by measuring the SSB. SSB information is transmitted according to a fixed period and may be repeatedly transmitted within one period.

### (2) Functions of SIB1

A SIB1 message carries basic information of a cell accessible by a UE, such as Public Land Mobile Network (PLMN) information, access control information, Random Access Channel (RACH) configuration information, and the like. SIB1 messages are repeatedly transmitted according to a fixed period.

### (3) Basic Concept of R19 On-Demand SSB Scenario

In related art, a network always transmits the SSB according to an agreed period, and SSB messages carry synchronization information that enables a UE to access the corresponding cell. To achieve network-side energy-saving, a base station may turn off SSB transmission or transmit SSBs sparsely. This will cause UEs in a connected state to fail to access the cell, and adversely affect cell coverage and network capacity.

### (4) Basic Concept of R19 On-Demand SIB1 Scenario

In related art, a network always transmits SIB1 messages according to an agreed period, and SIB 1 messages carry basic information of a cell for a UE to access, such as PLMN and RA configuration information. To achieve network-side energy-saving, a base station may turn off SIB1 transmission, which will cause the UE to fail to camp on the cell and adversely affect cell coverage and network capacity.

When a UE is in an idle state or an inactive state, if a cell is in an energy-saving state and fails to transmit SIB1 messages, but the UE detects the cell via SSB information of the cell and intends to access the cell, the cell needs to be triggered to start SIB1 transmission through a specific trigger mechanism, so that the UE can camp on the corresponding cell.

### (5) Cell Selection/Reselection Mechanism

When a UE performs cell selection or cell reselection, the basic principle is to camp on a cell with a higher frequency priority and optimal channel quality among cells in the same frequency band.

As shown in FIG. 2, an embodiment of the present disclosure provides a signal transmission method, including the following steps:
Step 201: selecting a target to-be-woken-up cell from a plurality of to-be-woken-up cells according to to-be-woken-up cell priority information.

In the embodiments of the present disclosure, the to-be-woken-up cell priority information may be configured by the network side or determined by the terminal itself. The to-be-woken-up cell priority information is used to indicate the wake-up priority of a cell. For example, a higher wake-up priority of a cell corresponds to a higher priority for the cell to be woken up.

In some embodiments, the terminal selects the to-be-woken-up cell with the highest priority as the target to-be-woken-up cell according to the to-be-woken-up cell priority information.

In some embodiments, the target to-be-woken-up cell satisfies cell selection conditions and/or cell reselection conditions.

Step 202: transmitting a wake-up signal to the target to-be-woken-up cell according to wake-up signal configuration information.

In some embodiments, the wake-up signal configuration information includes time-domain resources, frequency-domain resources, sequence information, and/or transmission periods of wake-up signals.

In the embodiments of the present disclosure, a target to-be-woken-up cell is selected from a plurality of to-be-woken-up cells according to to-be-woken-up cell priority information; a wake-up signal is transmitted to the target to-be-woken-up cell according to wake-up signal configuration information. Therefore, a to-be-woken-up cell with higher priority can be selected as the target to-be-woken-up cell based on the to-be-woken-up cell priority information. The above solution realizes the purpose of selecting an appropriate target to-be-woken-up cell to perform a wake-up procedure, thereby effectively avoiding access failure or camping failure caused by improper wake-up procedures, improving the success rate of subsequent access, and reducing power consumption of the terminal.

It should be noted that the signal transmission method provided by the embodiments of the present disclosure is applicable to scenarios with one or multiple to-be-woken-up cells.

When only one to-be-woken-up cell exists, the target to-be-woken-up cell is selected according to the to-be-woken-up cell priority information and whether the to-be-woken-up cell meets target conditions, where the target conditions include satisfying cell selection and/or cell reselection conditions. For example, if the to-be-woken-up cell has the highest wake-up priority or a priority higher than a preset threshold, and the to-be-woken-up cell satisfies cell selection or cell reselection conditions, the to-be-woken-up cell is determined as the target to-be-woken-up cell.

In some embodiments, the method of the present disclosure further includes: obtaining the to-be-woken-up cell priority information according to at least one of pre-configuration information, one or more system messages of a current camping cell, one or more radio resource control (RRC) messages of the current camping cell, one or more system messages of historical camping cells, and one or more RRC messages of the historical camping cells; wherein the one or more RRC messages are one or more RRC messages obtained when the terminal is in a connected state.

The RRC messages may be at least one of a RRC reconfiguration message or a RRC release message.

In the embodiments of the present disclosure, the system messages include a Master Information Block (MIB) message and/or System Information Block (SIB) messages.

In some embodiments, the method of the present disclosure further includes: obtaining the wake-up signal configuration information according to at least one of pre-configuration information, one or more system messages of a current camping cell, one or more radio resource control (RRC) messages of the current camping cell, one or more system messages of historical camping cells, and one or more RRC messages of the historical camping cells.

It should be noted that the wake-up signal configuration information and the to-be-woken-up cell priority information may be obtained via the same message or different messages, which is not limited in the present disclosure.

In some embodiments, the to-be-woken-up cell priority information is associated with at least one of the following five items:
item 1: frequency Level; the to-be-woken-up cell priority information may include priority information based on frequency levels; for example, the to-be-woken-up cell priority information may be indicated by frequency levels, and a higher frequency level corresponds to a higher wake-up priority of a cell on this frequency;
item 2: cell level; the to-be-woken-up cell priority information includes priority information based on cell levels; for example, the to-be-woken-up cell priority information may be indicated by cell levels, and a higher cell level corresponds to a higher wake-up priority of this cell;
item 3: one or more measurement signals corresponding to one or more cells; the to-be-woken-up cell priority information includes priority information determined by measurement signals of cells; for example, the to-be-woken-up cell priority is indicated by measurement signal quality of the cell, and higher measurement signal quality corresponds to higher wake-up priority of the cell; in some embodiments, the measurement signal quality may be characterized by Reference Signal Received Power (RSRP), Reference Signal Received Quality (RSRQ), Received Signal Strength Indication (RSSI), Signal-to-Noise Ratio (SNR), Signal-to-Interference-Noise Ratio (SINR), or the like;
item 4: location sorting information of one or more wake-up signal configurations; here, the to-be-woken-up cell priority information includes priority information determined based on the location sorting information of wake-up signal configurations. In some embodiments, the wake-up signal configuration information contains multiple wake-up signal configurations, and the to-be-woken-up cell priority information may be indicated by the location sorting of wake-up signal configurations in the wake-up configuration information. For example, an earlier sorting location corresponds to a higher wake-up priority of the cell or frequency corresponding to this wake-up signal configuration; alternatively, a later sorting location corresponds to a higher wake-up priority of the cell or frequency corresponding to this wake-up signal configuration;
item 5: channel quality information of one or more cells; in some embodiments, the channel quality information includes at least one of RSRP, RSRQ, RSSI (Received Signal Strength Indication, RSSI), SNR (Signal-to-Noise Ratio, SNR), and SINR (Signal-to-noise and Interference Ratio, SINR).

The to-be-woken-up cell priority information includes priority information determined based on channel quality information of one or more cells. In some embodiments, the to-be-woken-up cell priority information is indicated by channel quality information, and better channel quality corresponds to higher wake-up priority of the cell.

In some embodiments, the step of selecting a target to-be-woken-up cell from a plurality of to-be-woken-up cells according to to-be-woken-up cell priority information includes: selecting M to-be-woken-up cells with the highest to-be-woken-up cell priority from the plurality of to-be-woken-up cells, where M is a positive integer; determining the target to-be-woken-up cell based on the M to-be-woken-up cells.

As an implementation manner, the step of determining the target to-be-woken-up cell based on the M to-be-woken-up cells includes:
if M equals 1, taking the to-be-woken-up cell as the target to-be-woken-up cell;
if M is greater than 1, randomly selecting one cell from the M to-be-woken-up cells as the target to-be-woken-up cell, or selecting one cell from the M to-be-woken-up cells as the target to-be-woken-up cell according to terminal implementation, or selecting the to-be-woken-up cell with optimal channel quality from the M to-be-woken-up cells as the target to-be-woken-up cell. The target to-be-woken-up cell satisfies cell selection or cell reselection conditions, and/or the channel quality of the target to-be-woken-up cell is higher than a specific threshold.

Based on the above solution, in the embodiments of the present disclosure, a cell with the highest priority may be selected as the target to-be-woken-up cell on the premise that cell selection or cell reselection conditions are satisfied. If multiple to-be-woken-up cells share the same highest priority, the terminal may randomly select one to-be-woken-up cell as the target to-be-woken-up cell or select one to-be-woken-up cell according to internal implementation.

For example, when cell selection or cell reselection conditions are satisfied, the cell with the highest frequency priority may be selected as the target to-be-woken-up cell. If multiple to-be-woken-up cells correspond to the same frequency priority, the cell with optimal channel quality is selected as the target to-be-woken-up cell; or the cell with the highest priority is selected as the target to-be-woken-up cell among cells whose channel quality meets the cell selection or cell reselection conditions.

In some embodiments, after transmitting the wake-up signal to the target to-be-woken-up cell, the method further includes: starting a first timer, where the first timer is configured to determine whether the target to-be-woken-up cell fails to be woken up.

Here, based on the above first timer, the terminal may determine whether the target to-be-woken-up cell fails to be woken up, so as to execute corresponding subsequent processing.

In some embodiments, the method of the present disclosure further includes: if SIB1 and/or SSB transmitted by the target to-be-woken-up cell within the running duration of the first timer are not detected, determining that the target to-be-woken-up cell fails to be woken up.

In the embodiments of the present disclosure, after receiving the wake-up signal, the target to-be-woken-up cell needs to transmit SIB1 and/or SSB in response to the wake-up signal. If the terminal fails to receive SIB1 and/or SSB within a fixed time duration, wake-up failure of the target cell is determined. By starting the timer, the waiting duration for the terminal to receive SSB/SIB1 from the to-be-woken-up cell may be restricted.

In some embodiments, the method of the present disclosure further includes: when it is determined that the target to-be-woken-up cell fails to be woken up, selecting a to-be-woken-up cell other than the target to-be-woken-up cell from the plurality of to-be-woken-up cells to perform a wake-up procedure.

In a case that the target to-be-woken-up cell fails to be woken up, the target to-be-woken-up cell may not be successfully woken up within a certain time window (e.g., its channel quality remains poor for a long time). By switching to other to-be-woken-up cell other than the target to-be-woken-up cell to perform the wake-up procedure, the solution avoids access or camping failure caused by improper wake-up procedure, improves subsequent access success rate, and reduces power consumption of the terminal.

In some embodiments, the method of the present disclosure further includes: if the terminal detects SIB1 or SSB transmitted by the target to-be-woken-up cell within the running duration of the first timer, stopping the first timer.

If SIB1 or SSB is detected during the running duration of the first timer, the target to-be-woken-up cell is determined to be woken up successfully, and the first timer is stopped.

In some embodiments, the method of the present disclosure further includes: within a preset time period, refraining from determining, as the to-be-woken-up cell, the cell that failed to be woken up, and/or refraining from transmitting a wake-up signal to the cell that failed to be woken up.

A cell that failed to be woken up may fail to be woken up for a period of time (e.g., poor channel quality of the cell that failed to be woken up persists for a time period). Therefore, the cell that failed to be woken up within a preset time duration is determined to be a cell outside a to-be-woken-up cell range and/or wake-up signals are not transmitted to the cell that failed to be woken up within a preset time duration, access failure or camping failure caused by improper wake-up procedure can be avoided, a subsequent access success rate can be improved, and power consumption of the terminal can be reduced.

In some embodiments, the cells in the embodiments of the present disclosure include Network Energy Saving (NES) cells. The solution of the present disclosure is applicable to idle-state or inactive-state terminals wake up NES cells to transmit SIB messages, or applicable to RRC connected-state terminals wake up NES cells to transmit SSB.

The signal transmission method of the present disclosure is described below in combination with embodiments.

### Embodiment 1

In the embodiments of the present disclosure, Idle/inactive UEs select a proper cell to transmit wake-up signals based on to-be-woken-up cell priority information, so as to trigger the cell to transmit SIB1 or SSB messages. After transmitting the wake-up signal, the UE starts a timer (i.e., the first timer). If no SIB1 message is detected within the running duration of the first timer, the UE stops transmitting wake-up signals for triggering the SIB (i.e., the wake-up signal is used to indicate the cell to transmit SIB) by this cell within a preset time period and selects the next candidate cell that may be woken up.

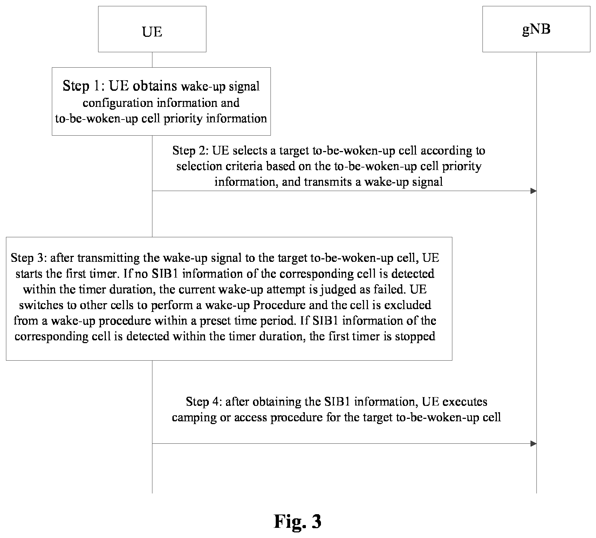

As shown in FIG. 3, the interaction steps are as follows.
Step 1: idle/inactive UE obtains wake-up signal configuration information and to-be-woken-up cell priority information via pre-configuration information, system messages or RRC messages.

In some embodiments, the system messages include system messages of the current camping cell or historical camping cells; the RRC messages include RRC messages of the current camping cell or historical camping cells.

In some embodiments, the to-be-woken-up cell priority information includes at least one of the following:
to-be-woken-up cell priority information based on frequency levels;
to-be-woken-up cell priority information based on cell levels;
to-be-woken-up cell priority information based on measurement signals, i.e., when the UE selects a cell to wake up, higher measurement signal quality of the cell corresponds to higher wake-up priority of the cell;
to-be-woken-up cell priority information based on location sorting information of wake-up signal configurations.

Step 2: the UE selects a target to-be-woken-up cell according to selection criteria based on the to-be-woken-up cell priority information, and transmits a wake-up signal.

In some embodiments, the selection criteria include at least one of the following:
selecting the cell with the highest priority (e.g., the cell with the highest frequency priority); if multiple cells share the same frequency priority, the UE selects the cell with optimal channel quality (channel qualities are sorted by R values in some embodiments) or randomly selects a cell whose channel quality meets specific conditions;
randomly selecting a cell whose channel quality satisfies cell selection and/or cell reselection conditions;
randomly selecting a cell whose channel quality is higher than a predefined threshold.

It should be noted that the channel quality of the to-be-woken-up cell or the cell to which wake-up signals are transmitted shall meet the threshold for cell selection and reselection, or a predefined threshold.

Step 3: after transmitting the wake-up signal to the target to-be-woken-up cell, the UE starts the first timer. If no SIB1 information of the corresponding cell is detected within the duration of the first timer, the current wake-up attempt is determined as failure. The UE switches to other cells to perform wake-up procedure and this cell will not be selected as to-be-woken-up cells within the preset time period. If SIB1 information of the corresponding cell is detected within the duration of the timer, the first timer is stopped.

Step 4: after obtaining the SIB1 information, the UE executes camping or access procedures for the target to-be-woken-up cell.

### Embodiment 2

A UE in connected state selects a proper cell to transmit a wake-up signal based on to-be-woken-up cell priority information. After transmitting the wake-up signal, the UE starts a first timer. If no SSB message is detected within the duration of the first timer, the UE stops transmitting wake-up signals for triggering the SSB by this cell (i.e., the wake-up signal is used to indicate the cell to transmit the SSB ) within a preset time period and selects the next cell that can be woken up.

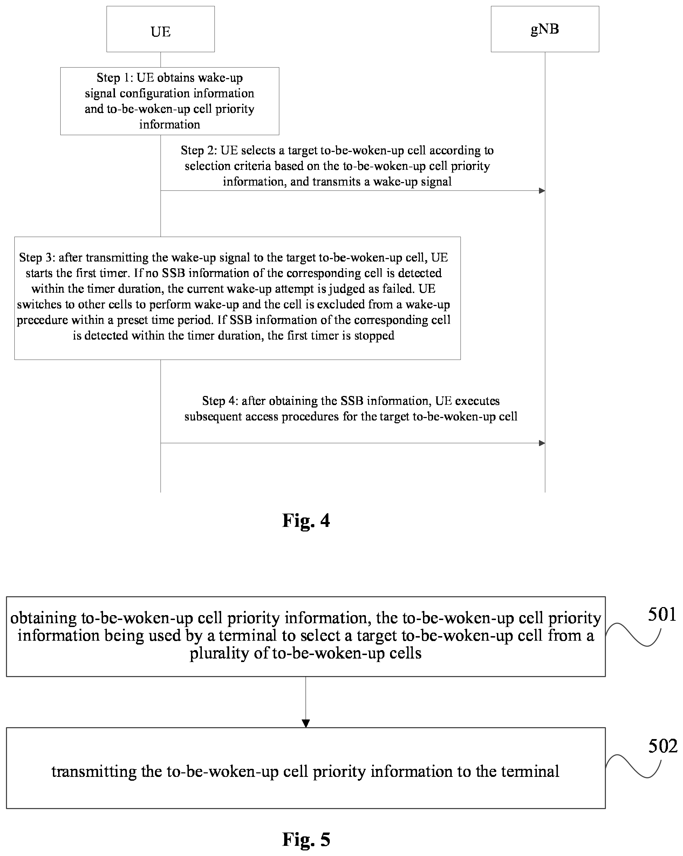

As shown in FIG. 4, the interaction steps are as follows:
Step 1: the idle/inactive UE obtains wake-up signal configuration information and to-be-woken-up cell priority information via pre-configuration information, system messages or RRC messages.

In some embodiments, the system messages include system messages of the current camping cell or historical camping cells; the RRC messages include RRC messages of the current camping cell or historical camping cells.

In some embodiments, the to-be-woken-up cell priority information includes at least one of the following types:
to-be-woken-up cell priority information based on frequency levels;
to-be-woken-up cell priority information based on cell levels;
to-be-woken-up cell priority information based on measurement signals, i.e., when the UE selects a cell to wake up, higher measurement signal quality of the cell corresponds to higher wake-up priority of the cell;
to-be-woken-up cell priority information based on location sorting information of wake-up signal configurations.

Step 2: the UE selects a target to-be-woken-up cell according to the following selection criteria based on the to-be-woken-up cell priority information, and transmits a wake-up signal.

In some embodiments, the selection criteria include at least one of the following:
selecting the cell with the highest priority (e.g., the cell with the highest frequency priority); if multiple cells share the same frequency priority, the UE selects the cell with optimal channel quality (channel qualities are sorted by R values in some embodiments) or randomly selects a cell whose channel quality meets specific conditions;
randomly selecting a cell whose channel quality satisfies cell selection and/or cell reselection conditions;
randomly selecting a cell whose channel quality is higher than a predefined threshold.

It should be noted that the channel quality of the to-be-woken-up cell or the cell to which wake-up signals are transmitted shall meet the threshold for cell selection and reselection, or a predefined threshold.

Step 3: after transmitting the wake-up signal to the target to-be-woken-up cell, the UE starts the first timer. If no SSB information of the corresponding cell is detected within the duration of the first timer, the current wake-up attempt is determined as failure. The UE switches to other cells to perform the wake-up procedure and this cell will not be selected to perform the wake-up procedure within a second time duration (i.e., the preset time period). If SSB information of the corresponding cell is detected within the duration of the first timer, the first timer is stopped.

Step 4: after obtaining the SSB information, the UE executes subsequent access procedures for the target to-be-woken-up cell.

**In** the embodiments of the present disclosure, a target to-be-woken-up cell is selected from a plurality of to-be-woken-up cells according to at least one of to-be-woken-up cell priority information and channel quality information of to-be-woken-up cells; a wake-up signal is transmitted to the target to-be-woken-up cell according to wake-up signal configuration information. Therefore, the above solution realizes the purpose of selecting an appropriate target to-be-woken-up cell to perform a wake-up procedure, thereby effectively avoiding access failure or camping failure caused by improper wake-up procedures, improving the success rate of subsequent access, and reducing power consumption of the terminal.

As shown in FIG. 5, an embodiment of the present disclosure further provides a signal transmission method executed by a first network-side device, and the method includes the following steps.

Step 501: obtaining to-be-woken-up cell priority information, where the to-be-woken-up cell priority information is used by a terminal to select a target to-be-woken-up cell from a plurality of to-be-woken-up cells.

In some embodiments, the to-be-woken-up cell priority information is obtained via at least one of an Xn interface, an F1 interface and a core network interface.

For example, the first network-side device may specifically be a base station. The first network-side device may obtain the to-be-woken-up cell priority information by configuring the to-be-woken-up cell priority information by itself, or obtain the to-be-woken-up cell priority information from a second network-side device (a neighbor base station of the first network-side device), or obtain the to-be-woken-up cell priority information from a core network device. For another example, if the first network-side device is specifically a Distributed Unit (DU), the DU obtains the to-be-woken-up cell priority information from a Centralized Unit (CU) via an F1 interface; or if the first network-side device is a CU, the CU obtains the to-be-woken-up cell priority information from a DU via an F1 interface.

Step 502: transmitting the to-be-woken-up cell priority information to the terminal.

The to-be-woken-up cell priority information is used to indicate the wake-up priority of each cell. For example, a higher to-be-woken-up cell priority corresponds to a higher priority for the cell to be woken up.

In the embodiments of the present disclosure, the first network-side device transmits to-be-woken-up cell priority information to the terminal, so that the terminal can select a target to-be-woken-up cell from a plurality of to-be-woken-up cells according to the to-be-woken-up cell priority information. This realizes the purpose of selecting an appropriate target to-be-woken-up cell to perform a wake-up procedure, thereby effectively avoiding access failure or camping failure caused by improper wake-up procedures, improving a subsequent access success rate and reducing a power consumption of the terminal.

In some embodiments, the method of the present disclosure further includes: transmitting wake-up signal configuration information to the terminal.

The wake-up signal configuration information includes time-domain resources, frequency-domain resources, sequence information and/or transmission periods of wake-up signals, which enables the terminal to transmit wake-up signals to the selected target to-be-woken-up cell according to the wake-up configuration information.

In some embodiments, before obtaining the to-be-woken-up cell priority information, the method further includes: transmitting a first request message to a second network-side device, where the first request message is used to request transmission of the to-be-woken-up cell priority information, and the second network-side device is a neighbor base station of the first network-side device.

In some embodiments, the second network-side device may also be a CU or a DU. For example, if the first network-side device is a CU, the second network-side device is a DU; if the first network-side device is a DU, the second network-side device is a CU.

In some embodiments, the method of the present disclosure further includes: when the to-be-woken-up cell priority information is configured by the first network-side device itself, transmitting the to-be-woken-up cell priority information to the second network-side device, where the second network-side device is a neighbor base station of the first network-side device.

When the first network-side device configures the to-be-woken-up cell priority information by itself, the first network-side device transmits the to-be-woken-up cell priority information to a base station (i.e., the second network-side device) of a cell that waits to be woken up, so that the second network-side device can subsequently send the to-be-woken-up cell priority information to a terminal.

In some embodiments, the to-be-woken-up cell priority information is associated with at least one of the following items: a frequency level; a cell level; one or more measurement signals corresponding to one or more cells; location sorting information of one or more wake-up signal configurations; channel quality information of one or more cells.

The to-be-woken-up cell priority information has been described in detail in the method embodiments at the terminal side, and will not be repeated here.

In the embodiments of the present disclosure, the to-be-woken-up cell priority information is transmitted to the terminal, so that the terminal can select a target to-be-woken-up cell from a plurality of to-be-woken-up cells according to the to-be-woken-up cell priority information. This realizes the purpose of selecting an appropriate target to-be-woken-up cell to perform a wake-up procedure, thereby effectively avoiding access failure or camping failure caused by improper wake-up procedures, improving a subsequent access success rate and reducing a power consumption of the terminal.

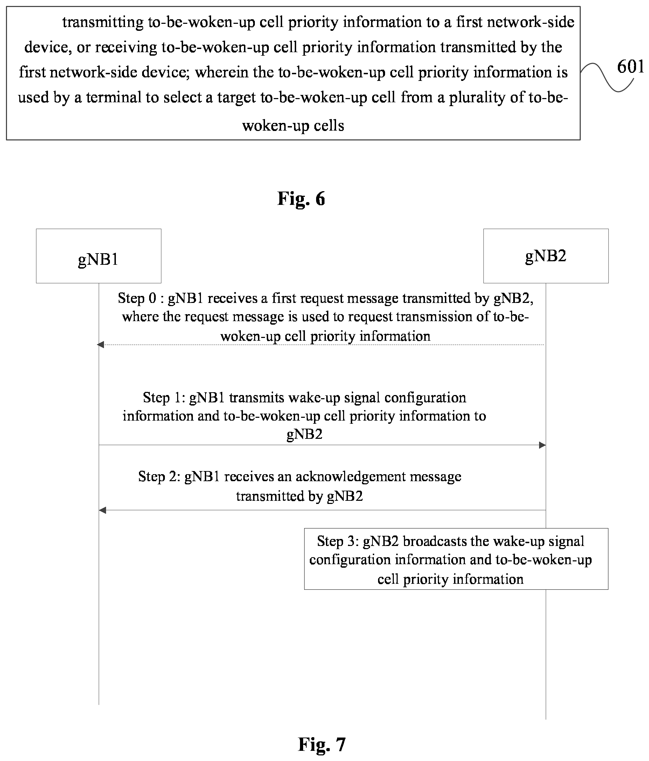

As shown in FIG. 6, an embodiment of the present disclosure further provides a signal transmission method executed by a second network-side device, and the method includes the following steps.

Step 601: transmitting to-be-woken-up cell priority information to the first network-side device, or receiving to-be-woken-up cell priority information transmitted by the first network-side device; wherein the to-be-woken-up cell priority information is used by a terminal to select a target to-be-woken-up cell from a plurality of to-be-woken-up cells.

For example, the first network-side device may be a base station, and the second network-side device is a neighbor base station of the first network-side device and transmits to-be-woken-up cell priority information to the first network-side device. For another example, if the first network-side device is a DU, the second network-side device is a CU, and the CU transmits to-be-woken-up cell priority information to the DU via an F1 interface; or if the first network-side device is a CU, the second network-side device is a DU, and the DU transmits to-be-woken-up cell priority information to the CU via an F1 interface.

In the embodiments of the present disclosure, the second network-side device transmits to-be-woken-up cell priority information to the first network-side device, so that the first network-side device can forward the to-be-woken-up cell priority information to a terminal. The terminal may then select an appropriate target to-be-woken-up cell from a plurality of to-be-woken-up cells according to the to-be-woken-up cell priority information, to perform wake-up procedures, avoiding access failure or camping failure caused by improper wake-up procedure, improving the subsequent access success rate and reducing the power consumption of the terminal.

In some embodiments, before transmitting the to-be-woken-up cell priority information to the first network-side device, the method further includes: receiving a first request message transmitted by the first network-side device, where the first request message is used to request transmission of the to-be-woken-up cell priority information.

In some embodiments, after receiving the to-be-woken-up cell priority information transmitted by the first network-side device, the method further includes: transmitting a response message to the first network-side device.

In some embodiments, the response message includes an acknowledgement message for the to-be-woken-up cell priority information or suggestion information for the to-be-woken-up cell priority information.

After receiving the acknowledgement message, the first network-side device confirms that the second network-side device has received the to-be-woken-up cell priority information. After receiving the suggestion information, the first network-side device may adjust the to-be-woken-up cell priority information accordingly based on the suggestion information.

In some embodiments, the to-be-woken-up cell priority information is associated with at least one of the following: a frequency level; a cell level; one or more measurement signals corresponding to one or more cells; location sorting information of one or more wake-up signal configurations; channel quality information of one or more cells.

It should be noted that the to-be-woken-up cell priority information has been described in detail in the method embodiments at the terminal side, and will not be repeated here.

The interaction Process of to-be-woken-up cell priority information between base stations is described below.

As shown in FIG. 7, the interaction steps are as follow.

Step 0: gNB1 receives a request message (i.e., the first request message) transmitted by gNB2, where the request message is used to request transmission of to-be-woken-up cell priority information. This step 0 is an optional step.

Step 1: gNB1 transmits wake-up signal configuration information and to-be-woken-up cell priority information to gNB2.

Step 2: gNB1 receives an acknowledgement message transmitted by gNB2.

Step 3: gNB2 broadcasts the wake-up signal configuration information and to-be-woken-up cell priority information.

The above to-be-woken-up cell priority information may also be configured by gNB2 itself, or transmitted to base stations of surrounding cells that wait to be woken up.

In the embodiments of the present disclosure, base stations exchange to-be-woken-up cell priority information with each other, so that a terminal can obtain the to-be-woken-up cell priority information and select appropriate cells to execute wake-up procedures, thereby avoiding access or camping failure and extra UE power consumption caused by improper wake-up operations.

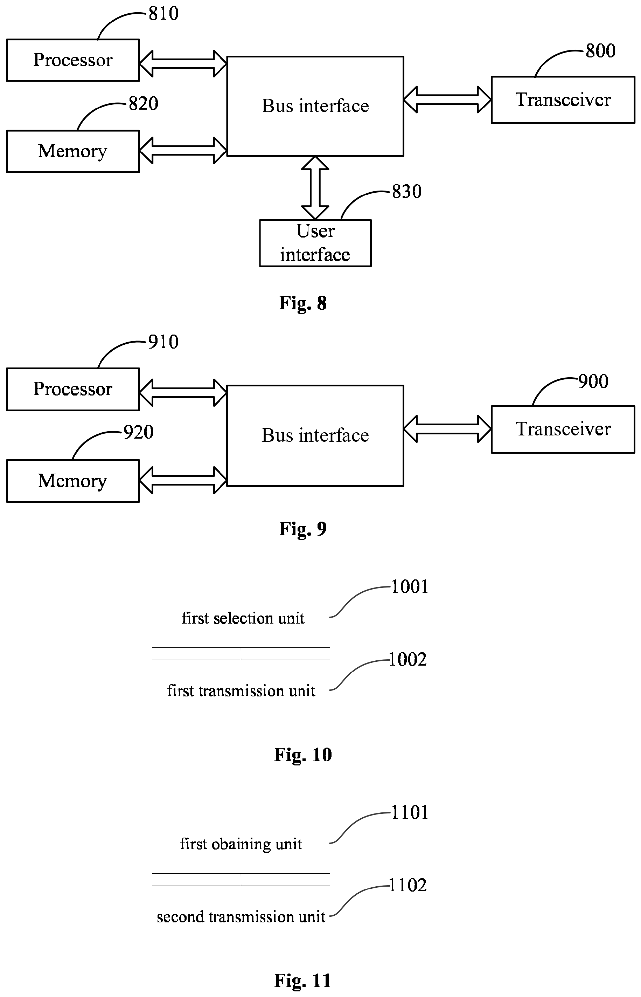

As shown in FIG. 8, an embodiment of the present disclosure provides a signal transmission device applied to a terminal, the signal transmission device includes a memory 820, a transceiver 800, and a processor 810.

The memory 820 is configured to store computer programs; the transceiver 800 is configured to transmit and receive data under control of the processor 810; the processor 810 is configured to read the computer programs stored in the memory 820 and execute the following operations:
selecting a target to-be-woken-up cell from a plurality of to-be-woken-up cells according to to-be-woken-up cell priority information;
transmitting a wake-up signal to the target to-be-woken-up cell according to wake-up signal configuration information.

In FIG. 8, a bus architecture may include any number of interconnected buses and bridges, which link various circuits including one or more processors represented by the processor 810 and memories represented by the memory 820. The bus architecture may also connect various other circuits such as peripheral devices, voltage regulators and power management circuits, which are well known in the art and will not be elaborated herein. A bus interface provides interfaces. The transceiver 800 may include a transmitter and a receiver, providing a unit for communicating with other devices via transmission media including wireless channels, wired channels, optical cables and the like. For different user devices, the user interface 830 may be an interface for connecting external or internal devices, including but not limited to keypads, displays, speakers, microphones, joysticks and the like.

The processor 810 is responsible for managing the bus architecture and general processing; the memory 820 may store data used by the processor 810 during execution.

The processor 810 may be a Central Processing Unit (CPU), an Application Specific Integrated Circuit (ASIC), a Field Programmable Gate Array (FPGA) or a Complex Programmable Logic Device (CPLD), and may adopt a multi-core architecture.

The processor invokes computer programs stored in the memory to execute any of the signal transmission methods provided in the embodiments of the present disclosure according to executable instructions obtained. The processor and the memory may also be physically separated.

In some embodiments, the processor further executes the following steps:
obtaining the to-be-woken-up cell priority information according to at least one of pre-configuration information, one or more system messages of a current camping cell, one or more radio resource control (RRC) messages of the current camping cell,
one or more system messages of a historical camping cell, and one or more RRC messages of the historical camping cell; wherein the one or more RRC messages are one or more RRC messages obtained when the terminal is in a connected state.

In some embodiments, the to-be-woken-up cell priority information is associated with at least one of the following:
a frequency level; a cell level; one or more measurement signals corresponding to one or more cells; location sorting information of one or more wake-up signal configurations; channel quality information of one or more cells.

In some embodiments, the processor further executes the following steps: selecting M to-be-woken-up cells with the highest to-be-woken-up cell priority from the plurality of to-be-woken-up cells, where M is a positive integer;
determining the target to-be-woken-up cell based on the M to-be-woken-up cells.

In some embodiments, the processor further executes the following steps: if M equals 1, taking the to-be-woken-up cell as the target to-be-woken-up cell; or if M is greater than 1, randomly selecting a cell from the M to-be-woken-up cells as the target to-be-woken-up cell, or selecting a cell from the M to-be-woken-up cells as the target to-be-woken-up cell according to implementation of the terminal, or selecting a to-be-woken-up cell with optimal channel quality from the M to-be-woken-up cells as the target to-be-woken-up cell;
wherein the target to-be-woken-up cell satisfies cell selection or cell reselection conditions.

In some embodiments, the processor further executes the following steps: starting a first timer, where the first timer is configured to determine whether the target to-be-woken-up cell fails to be woken up.

In some embodiments, the processor further executes the following steps:
if the terminal fails to detect a System Information Block SIB1 or a Synchronization Signal/PBCH Block SSB transmitted by the target to-be-woken-up cell within the running duration of the first timer, determining that the target to-be-woken-up cell fails to be woken up.

In some embodiments, the processor further executes the following steps: when it is determined that the target to-be-woken-up cell fails to be woken up, selecting a to-be-woken-up cell other than the target to-be-woken-up cell from the plurality of to-be-woken-up cells to perform a wake-up procedure.

In some embodiments, the processor further executes the following steps:
if the SIB 1 or SSB transmitted by the target to-be-woken-up cell is detected within the running duration of the first timer, stopping the first timer.

In some embodiments, the processor further executes the following steps: within a preset time period, refraining from determining, as a to-be-woken-up cell, the cell that fails to be woken up, and/or refraining from transmitting a wake-up signal to the cell that fails to be woken up.

It should be noted that the above device provided by the embodiments of the present disclosure can execute all method steps of the method embodiments of the terminal side and achieve the same technical effects, and repeated description will be omitted here.

As shown in FIG. 9, an embodiment of the present disclosure further provides a signal transmission device, including a memory 920, a transceiver 900, and a processor 910.

The memory 920 is configured to store computer programs; the transceiver 900 is configured to transmit and receive data under control of the processor 910; the processor 910 is configured to read the computer programs stored in the memory 920 and execute the following operations:
obtaining to-be-woken-up cell priority information, where the to-be-woken-up cell priority information is used by a terminal to select a target to-be-woken-up cell from a plurality of to-be-woken-up cells; transmitting the to-be-woken-up cell priority information to the terminal;
or, transmitting to-be-woken-up cell priority information to the first network-side device, or receiving to-be-woken-up cell priority information transmitted by the first network-side device; wherein the to-be-woken-up cell priority information is used by a terminal to select a target to-be-woken-up cell from a plurality of to-be-woken-up cells.

**In** FIG. 9, a bus architecture may include any number of interconnected buses and bridges, which link various circuits including one or more processors represented by the processor 910 and a memory represented by the memory 920. The bus architecture may also connect various other circuits such as peripheral devices, voltage regulators and power management circuits, which are well known in the art and will not be elaborated herein. A bus interface provides interfaces. The transceiver 900 may include a transmitter and a receiver, providing a unit for communicating with other devices via transmission media including wireless channels, wired channels, optical cables and the like. The processor 910 is responsible for managing the bus architecture and general processing; the memory 920 may store data used by the processor 910 during execution.

The processor 910 may be a CPU, ASIC, FPGA or CPLD, and may adopt a multi-core architecture.

It should be noted that the above device can execute all method steps of the method embodiments of the first network-side device or the second network-side device and achieve identical technical effects, and repeated description will be omitted.

As shown in FIG. 10, an embodiment of the present disclosure further provides a signal transmission device, including:
a first selection unit 1001, configured to select a target to-be-woken-up cell from a plurality of to-be-woken-up cells according to to-be-woken-up cell priority information;
a first transmission unit 1002, configured to transmit a wake-up signal to the target to-be-woken-up cell according to wake-up signal configuration information.

**In** some embodiments, the device of the present disclosure further includes:
a second obtaining unit, configured to obtain the to-be-woken-up cell priority information according to at least one of pre-configuration information, one or more system messages of a current camping cell, one or more radio resource control (RRC) messages of the current camping cell, one or more system messages of a historical camping cell, and one or more RRC messages of the historical camping cell;
wherein the one or more RRC messages are one or more RRC messages obtained when the terminal is in a connected state.

In some embodiments, the to-be-woken-up cell priority information is associated with at least one of the following: a frequency level; a cell level; one or more measurement signals corresponding to one or more cells; location sorting information of one or more wake-up signal configurations; channel quality information of one or more cells.

In some embodiments, the first selection unit includes: a selection sub-unit, configured to select M to-be-woken-up cells with the highest to-be-woken-up cell priority from the plurality of to-be-woken-up cells, where M is a positive integer;
an obtaining sub-unit, configured to: if M equals 1, take the to-be-woken-up cell as the target to-be-woken-up cell; or, if M is greater than 1, randomly select a cell from the M to-be-woken-up cells as the target to-be-woken-up cell, or select a cell from the M to-be-woken-up cells as the target to-be-woken-up cell according to implementation of the terminal, or select the to-be-woken-up cell with optimal channel quality from the M to-be-woken-up cells as the target to-be-woken-up cell.

The target to-be-woken-up cell satisfies cell selection or cell reselection conditions.

In some embodiments, the device of the present disclosure further includes: a starting unit, configured to start a first timer after the first transmission unit transmits a wake-up signal to the target to-be-woken-up cell, where the first timer is configured to determine whether the target to-be-woken-up cell fails to be woken up.

In some embodiments, the device of the present disclosure further includes: a determination unit, configured to determine that the target to-be-woken-up cell fails to be woken up if SIB1 or SSB transmitted by the target to-be-woken-up cell fails to be detected within the running duration of the first timer.

In some embodiments, the device of the present disclosure further includes: a second selection unit, configured to select a to-be-woken-up cell other than the target to-be-woken-up cell from the plurality of to-be-woken-up cells to perform a wake-up procedure when it is determined that the target to-be-woken-up cell fails to be woken up.

In some embodiments, the device of the present disclosure further includes: a first processing unit, configured to stop the first timer if the SIB1 or SSB transmitted by the target to-be-woken-up cell is detected within the running duration of the first timer.

In some embodiments, the device of the present disclosure further includes: a second processing unit, configured to, within a preset time period, refrain from determining, as a to-be-woken-up cell, the cell that fails to be woken up and/or refrain from transmitting a wake-up signal to the cell that fails to be woken up.

It should be noted that the above device can execute all method steps of the method embodiments of the signal transmission method applied to the terminal, and achieve identical technical effects, and repeated description same as those in the method embodiments and the beneficial effects will not be repeated herein.

As shown in FIG. 11, an embodiment of the present disclosure further provides a signal transmission device, including:
a first obtaining unit 1101, configured to obtain to-be-woken-up cell priority information, where the to-be-woken-up cell priority information is used by a terminal to select a target to-be-woken-up cell from a plurality of to-be-woken-up cells;
a second transmission unit 1102, configured to transmit the to-be-woken-up cell priority information to the terminal.

In some embodiments, the device of the present disclosure further includes: a third transmission unit, configured to transmit a first request message to a second network-side device before the first obtaining unit obtains the to-be-woken-up cell priority information, where the first request message is used to request transmission of the to-be-woken-up cell priority information, and the second network-side device is a neighbor base station of the first network-side device.

In some embodiments, the device of the present disclosure further includes: a fourth transmission unit, configured to transmit the to-be-woken-up cell priority information to the second network-side device when the to-be-woken-up cell priority information is configured by the first network-side device itself, where the second network-side device is a neighbor base station of the first network-side device.

In some embodiments, the to-be-woken-up cell priority information is associated with at least one of the following: a frequency level; a cell level; one or more measurement signals corresponding to one or more cells; location sorting information of one or more wake-up signal configurations; channel quality information of one or more cells.

It should be noted that the above device can execute all method steps of the method embodiments of the signal transmission method applied to the first network-side device, and achieve identical technical effects, and repeated description same as those in the method embodiments and the beneficial effects will not be repeated herein.

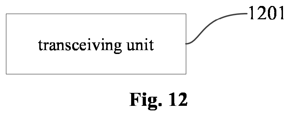

As shown in FIG. 12, an embodiment of the present disclosure further provides a signal transmission device, including:
a transceiving unit 1201, configured to transmit to-be-woken-up cell priority information to the first network-side device, or receive to-be-woken-up cell priority information transmitted by the first network-side device; wherein the to-be-woken-up cell priority information is used by a terminal to select a target to-be-woken-up cell from a plurality of to-be-woken-up cells.

In some embodiments, the device of the present disclosure further includes: a third obtaining unit, configured to receive a first request message transmitted by the first network-side device before the transceiving unit transmits to-be-woken-up cell priority information to the first network-side device, where the first request message is used to request transmission of the to-be-woken-up cell priority information.

In some embodiments, the device of the present disclosure further includes: a fifth transmission unit, configured to transmit a response message to the first network-side device after the transceiving unit receives the to-be-woken-up cell priority information transmitted by the first network-side device.

In some embodiments, the response message includes an acknowledgement message for the to-be-woken-up cell priority information or suggestion information for the to-be-woken-up cell priority information.

In some embodiments, the to-be-woken-up cell priority information is associated with at least one of the following: a frequency level; a cell level; one or more measurement signals corresponding to one or more cells; location sorting information of one or more wake-up signal configurations; channel quality information of one or more cells.

It should be noted that the above device can execute all method steps of the method embodiments of the signal transmission method applied to the second network-side device, and achieve identical technical effects, and repeated description same as those in the method embodiments and the beneficial effects will not be repeated herein.

It should be noted that the division of units in the embodiments of the present disclosure is illustrative, only logical function division, and different division modes may be adopted in actual implementation. In addition, each functional unit in the embodiments of the present disclosure may be integrated into one processing unit, exist independently physically, or two or more units integrated into one single unit. The integrated units may be implemented by hardware or software functional units.

If the integrated units are implemented as software functional units and sold or used as independent products, they may be stored in a processor-readable storage medium. Based on this understanding, the essential part of the technical solutions of the present disclosure, or the part contributing to the prior art, or the whole or part of the technical solutions may be embodied in the form of a computer software product stored in a storage medium, containing multiple instructions to enable a computer device (which may be a personal computer, server, network device, etc.) or a processor to execute all or partial steps of any method embodiment of the present disclosure. The foregoing storage medium includes U disks, removable hard disks, Read-Only Memory (ROM), Random Access Memory (RAM), magnetic disks, optical disks and other media capable of storing program codes.

In some embodiments of the present disclosure, there is further provided a processor-readable storage medium, wherein the processor-readable storage medium stores program instructions, and the program instructions are configured to cause the processor to execute all steps implemented by the above method embodiments executed by the terminal, or execute all steps implemented by the method embodiments executed by the first network-side device or the second network-side device, and can achieve the same technical effects. The same parts and beneficial effects of this embodiment as those of the method embodiments will not be further described in detail herein.

A terminal device in the embodiments of the present disclosure may be a device providing voice and/or data connectivity to users, a handheld device with wireless connection capability, or other processing devices connected to a wireless modem. Different systems adopt different names for terminal devices; for example, terminal devices are called User Equipment (UE) in 5G systems. A wireless terminal device may communicate with one or more Core Networks (CN) via a Radio Access Network (RAN). The wireless terminal device may be a mobile terminal such as a mobile phone (cellular phone) and a computer with mobile terminal functions, including portable, pocket-sized, handheld, built-in or vehicle-mounted mobile devices exchanging voice/data with the radio access network. Examples include Personal Communication Service (PCS) phones, cordless phones, Session Initiation Protocol (SIP) phones, Wireless Local Loop (WLL) stations, Personal Digital Assistants (PDAs) and the like. A wireless terminal device may also be referred to as a system, subscriber unit, subscriber station, mobile station, mobile device, remote station, access point, remote terminal, access terminal, user terminal, user agent, user equipment or user device, which is not limited by the present disclosure.

The network device (or network-side device) involved in the embodiments of the present disclosure may be a base station, and the base station may include multiple cells that provide services for terminals. Depending on specific application scenarios, a base station can also be called an access point, or a device in the access network that communicates with wireless terminal devices over the air interface via one or more sectors, or other names. The network device can be used to convert received air frames and Internet Protocol (IP) packets mutually, acting as a router between wireless terminal devices and the remaining part of the access network, where the remaining part of the access network may include an Internet Protocol (IP) communication network. The network device can also coordinate the management of attributes of the air interface. For example, the network device involved in the embodiments of the present disclosure may be a network device (Base Transceiver Station, BTS) in Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in Long Term Evolution (LTE) system, a 5G base station (gNB) in 5G network architecture (next generation system), and can also be Home evolved Node B (HeNB), relay node, femto base station (femto), pico base station (pico), etc., which is not limited in the embodiments of the present disclosure. In some network structures, a network device may include a Centralized Unit (CU) node and a Distributed Unit (DU) node, and the centralized unit and the distributed unit can also be deployed geographically separately.

Network devices and terminal devices may each use one or multiple antennas to perform Multiple Input Multiple Output (MIMO) transmission. MIMO transmission may be Single-User MIMO (SU-MIMO) or Multi-User MIMO (MU-MIMO). MIMO types include 2D-MIMO, 3D-MIMO, Full-Dimension MIMO (FD-MIMO), massive-MIMO, diversity transmission, precoding transmission, beamforming transmission and the like.

Persons skilled in the art should understand that the embodiments of the present disclosure may be provided as a method, a system, or a computer program product. Therefore, the present disclosure may adopt a hardware embodiment, a software embodiment, or an embodiment combining software and hardware. Furthermore, the present disclosure may adopt the form of a computer program product implemented on one or more computer-usable storage media (including but not limited to disk storage media and optical storage media) containing computer-usable program codes.

The present disclosure is described with reference to flowcharts and/or block diagrams of the methods, devices (systems) and computer program products according to the embodiments of the present disclosure. It should be understood that each flow and/or block in the flowcharts/block diagrams, and combinations thereof, may be implemented by computer-executable instructions. These computer-executable instructions may be provided to a processor of a general-purpose computer, special-purpose computer, embedded processor or other programmable data processing devices to generate a machine, so that instructions executed by the processor of the computer or other programmable data processing devices generate devices for implementing the functions specified in one or more flowchart flows and/or block diagram blocks.

These processor-executable instructions may also be stored in a processor-readable memory capable of guiding a computer or other programmable data processing devices to operate in a specific manner, so that instructions stored in the processor-readable memory generate manufacturing products containing instruction devices that implement functions specified in one or more flowchart flows and/or block diagram blocks.

These processor-executable instructions may also be loaded into a computer or other programmable data processing devices to execute a series of operation steps on the computer or programmable devices to generate a computer-implemented process, so that instructions executed on the computer or programmable devices provide steps for implementing functions specified in one or more flowchart flows and/or block diagram blocks.

In addition, it should be pointed out that in the devices and methods of the present disclosure, each component or step may be decomposed and/or recombined obviously. Such decomposition and recombination shall be regarded as equivalent solutions of the present disclosure. Moreover, the steps of the above series of processing procedures may naturally be executed in chronological order as described, but execution is not limited to chronological order; certain steps may be executed in parallel or independently of each other. Persons of ordinary skill in the art can understand that all or any steps/components of the methods and devices of the present disclosure may be implemented by hardware, firmware, software or a combination thereof in any computing device (processor, storage medium, etc.) or computing device network, which can be realized by persons of ordinary skill in the art using basic programming skills after reading the specification of the present disclosure.

It should be noted that the division of the above modules is merely logical function division, and all or partial modules may be integrated into one physical entity or exist physically separated in actual implementation. In addition, these modules may all be implemented in software invoked by processing elements; all implemented in hardware; or partial modules implemented via software invoked by processing elements and partial modules in hardware. For example, a certain module may be an independently arranged processing element or integrated into a chip of the above device; program codes may also be stored in the memory of the above device, and the processing element of the device invokes and executes the functions of the above determination module. Other modules are implemented in the same way. Furthermore, all or partial modules may be integrated together or implemented independently. The processing element herein may be an integrated circuit with signal processing capability. During implementation, each step of the above methods or each module of the above devices may be completed via hardware integrated logic circuits inside the processing element or software-form instructions.

For example, each module, unit, sub-unit or sub-module may be one or more integrated circuits configured to execute the above methods, such as one or more ASICs (Application Specific Integrated Circuits), one or more DSPs (digital signal processors), one or more FPGAs (Field Programmable Gate Array) and the like. For another example, if a module is implemented by scheduling program codes via a processing element, the processing element may be a general-purpose processor such as a CPU (Field Programmable Gate Array) or other processors capable of invoking program codes. For another example, modules may be integrated together and implemented in a System-on-Chip (SoC) form.

The terms "first", "second" and the like in the specification and claims of the present disclosure are used to distinguish similar objects, and are not intended to describe a specific sequence or order. It should be understood that data labeled in such manner may be interchanged under appropriate circumstances, so that the embodiments of the present disclosure described herein may be implemented in an order different from the illustrated or described order. In addition, the terms "include", "have" and any variants thereof are intended to cover non-exclusive inclusion. For example, a process, method, system, product or device containing a series of steps or units is not limited to the clearly listed steps or units, and may further include other steps or units not explicitly listed or inherent to such process, method, product or device. In addition, the use of "and/or" in the specification and claims represents at least one of the connected objects; for example, A and/or B and/or C represents seven scenarios: A alone, A and B simultaneously, B alone, A and C simultaneously, B and C simultaneously, A, B and C simultaneously, C alone. Similarly, the phrase "at least one of A and B" in the specification and claims shall be interpreted as "A alone, B alone, or A and B together".

Obviously, persons skilled in the art can make various modifications and variations to the present disclosure without departing from the spirit and scope of the present disclosure. If such modifications and variations fall within the scope of the claims of the present disclosure and their equivalent technical solutions, the present disclosure intends to cover such modifications and variations.

## Claims

1. A signal transmission method performed by a terminal, the method comprising:
selecting a target to-be-woken-up cell from a plurality of to-be-woken-up cells according to to-be-woken-up cell priority information;
transmitting a wake-up signal to the target to-be-woken-up cell according to wake-up signal configuration information.

2. The method according to claim 1, further comprising:
obtaining the to-be-woken-up cell priority information according to at least one of pre-configuration information, one or more system messages of a current camping cell, one or more radio resource control (RRC) messages of the current camping cell, one or more system messages of historical camping cells, and one or more RRC messages of the historical camping cells;
wherein the one or more RRC messages are one or more RRC messages obtained when the terminal is in a connected state.

3. The method according to claim 1, wherein the to-be-woken-up cell priority information is associated with at least one of the following items:
a frequency level;
a cell level;
one or more measurement signals corresponding to one or more cells;
location sorting information of one or more wake-up signal configurations;
channel quality information of one or more cells.

4. The method according to claim 1, wherein selecting the target to-be-woken-up cell from the plurality of to-be-woken-up cells according to the to-be-woken-up cell priority information comprises:
selecting M to-be-woken-up cells with the highest to-be-woken-up cell priority from the plurality of to-be-woken-up cells, wherein M is a positive integer;
when M equals 1, taking the M to-be-woken-up cell as the target to-be-woken-up cell; or when M is greater than 1, randomly selecting one cell from the M to-be-woken-up cells as the target to-be-woken-up cell, or selecting one cell from the M to-be-woken-up cells as the target to-be-woken-up cell based on terminal implementation, or selecting the to-be-woken-up cell with optimal channel quality from the M to-be-woken-up cells as the target to-be-woken-up cell;
wherein the target to-be-woken-up cell satisfies a cell selection condition or a cell reselection condition.

5. The method according to claim 1, wherein after transmitting the wake-up signal to the target to-be-woken-up cell, the method further comprises:
starting a first timer, the first timer being configured to determine whether the target to-be-woken-up cell fails to be woken up.

6. The method according to claim 5, further comprising:
determining that the target to-be-woken-up cell fails to be woken up if a system information block 1 (SIB1) or a synchronization signal block (SSB) transmitted by the target to-be-woken-up cell is not detected within a running duration of the first timer.

7. The method according to claim 5 or claim 6, further comprising:
when it is determined that the target to-be-woken-up cell fails to be woken up, selecting a to-be-woken-up cell other than the target to-be-woken-up cell from the plurality of to-be-woken-up cells to execute a wake-up procedure.

8. The method according to claim 5, further comprising:
stopping the first timer if a SIB1 or a SSB transmitted by the target to-be-woken-up cell is detected within the running duration of the first timer.

9. The method according to claim 5, further comprising:
within a preset time period, refraining from determining, as a to-be-woken-up cell, a cell that fails to be woken up, and/or refraining from transmitting a wake-up signal to a cell that fails to be woken up.

10. A signal transmission method performed by a first network-side device, the method comprising:
obtaining to-be-woken-up cell priority information, the to-be-woken-up cell priority information being used by a terminal to select a target to-be-woken-up cell from a plurality of to-be-woken-up cells;
transmitting the to-be-woken-up cell priority information to the terminal.

11. The method according to claim 10, wherein before obtaining the to-be-woken-up cell priority information, the method further comprises:
transmitting a first request message to a second network-side device, the first request message being used to request transmission of the to-be-woken-up cell priority information, and the second network-side device being a neighboring base station of the first network-side device.

12. The method according to claim 10, further comprising:
when the to-be-woken-up cell priority information is configured by the first network-side device itself, transmitting the to-be-woken-up cell priority information to a second network-side device, the second network-side device being a neighboring base station of the first network-side device.

13. The method according to claim 10, wherein the to-be-woken-up cell priority information is associated with at least one of the following items:
a frequency level;
a cell level;
one or more measurement signals corresponding to one or more cells;
location sorting information of one or more wake-up signal configurations;
channel quality information of one or more cells.

14. A signal transmission method performed by a second network-side device, the method comprising:
transmitting to-be-woken-up cell priority information to a first network-side device, or receiving to-be-woken-up cell priority information transmitted by the first network-side device;
wherein the to-be-woken-up cell priority information is used by a terminal to select a target to-be-woken-up cell from a plurality of to-be-woken-up cells.

15. The method according to claim 14, wherein before transmitting the to-be-woken-up cell priority information to the first network-side device, the method further comprises:
receiving a first request message transmitted by the first network-side device, the first request message being used to request transmission of the to-be-woken-up cell priority information.

16. The method according to claim 14, wherein after receiving the to-be-woken-up cell priority information transmitted by the first network-side device, the method further comprises:
transmitting a response message to the first network-side device.

17. The method according to claim 16, wherein the response message comprises acknowledgement information for the to-be-woken-up cell priority information or suggestion information for the to-be-woken-up cell priority information.

18. The method according to claim 14, wherein the to-be-woken-up cell priority information is associated with at least one of the following items:
a frequency level;
a cell level;
one or more measurement signals corresponding to one or more cells;
location sorting information of one or more wake-up signal configurations;
channel quality information of one or more cells.

19. A signal transmission device, comprising:
a memory, a transceiver and a processor; wherein the memory is configured to store computer programs; the transceiver is configured to transmit and receive data under control of the processor; the processor is configured to read the computer programs stored in the memory and perform the following operations:
selecting a target to-be-woken-up cell from a plurality of to-be-woken-up cells according to to-be-woken-up cell priority information;
transmitting a wake-up signal to the target to-be-woken-up cell according to wake-up signal configuration information.

20. The device according to claim 19, wherein the processor is further configured to perform the following steps:
obtaining the to-be-woken-up cell priority information according to at least one of pre-configuration information, one or more system messages of a current camping cell, one or more radio resource control (RRC) messages of the current camping cell, one or more system messages of historical camping cells, and one or more RRC messages of the historical camping cells;
wherein the one or more RRC messages are one or more RRC messages obtained when the terminal is in a connected state.

21. The device according to claim 19, wherein the to-be-woken-up cell priority information is associated with at least one of the following items:
a frequency level;
a cell level;
one or more measurement signals corresponding to one or more cells;
location sorting information of one or more wake-up signal configurations;
channel quality information of one or more cells.

22. The device according to claim 19, wherein the processor is further configured to perform the following steps:
selecting M to-be-woken-up cells with the highest to-be-woken-up cell priority from the plurality of to-be-woken-up cells, where M is a positive integer;
when M equals 1, taking the M to-be-woken-up cell as the target to-be-woken-up cell; or when M is greater than 1, randomly selecting one cell from the M to-be-woken-up cells as the target to-be-woken-up cell, or selecting one cell from the M to-be-woken-up cells as the target to-be-woken-up cell based on terminal implementation, or selecting the to-be-woken-up cell with optimal channel quality from the M to-be-woken-up cells as the target to-be-woken-up cell;
wherein the target to-be-woken-up cell satisfies a cell selection condition or a cell reselection condition.

23. The device according to claim 19, wherein the processor is further configured to perform the following step:
starting a first timer, the first timer being configured to determine whether the target to-be-woken-up cell fails to be woken up.

24. The device according to claim 23, wherein the processor is further configured to perform the following step:
determining that the target to-be-woken-up cell fails to be woken up if a system information block 1 (SIB1) or a synchronization signal block (SSB) transmitted by the target to-be-woken-up cell is not detected within a running duration of the first timer.

25. The device according to claim 23 or claim 24, wherein the processor is further configured to perform the following step:
when it is determined that the target to-be-woken-up cell fails to be woken up, selecting a to-be-woken-up cell other than the target to-be-woken-up cell from the plurality of to-be-woken-up cells to execute a wake-up procedure.

26. The device according to claim 23, wherein the processor is further configured to perform the following step:
stopping the first timer if a SIB1 or a SSB transmitted by the target to-be-woken-up cell is detected within a running duration of the first timer.

27. The device according to claim 23, wherein the processor is further configured to perform the following step:
within a preset time period, refraining from determining, as a to-be-woken-up cell, a cell that fails to be woken up, and/or refraining from transmitting a wake-up signal to a cell that fails to be woken up.

28. A signal transmission device, comprising:
a memory, a transceiver and a processor; wherein the memory is configured to store computer programs; the transceiver is configured to transmit and receive data under control of the processor;
wherein the processor is configured to read the computer programs stored in the memory and perform the following operations:
obtaining to-be-woken-up cell priority information, the to-be-woken-up cell priority information being used by a terminal to select a target to-be-woken-up cell from a plurality of to-be-woken-up cells;
transmitting the to-be-woken-up cell priority information to the terminal.

29. The device according to claim 28, wherein the processor is further configured to perform the following step:
transmitting a first request message to a second network-side device, the first request message being used to request transmission of the to-be-woken-up cell priority information, and the second network-side device being a neighboring base station of the first network-side device.

30. The device according to claim 28, wherein the processor is further configured to perform the following step:
when the to-be-woken-up cell priority information is configured by the first network-side device itself, transmitting the to-be-woken-up cell priority information to a second network-side device, the second network-side device being a neighboring base station of the first network-side device.

31. A signal transmission device, comprising:
a memory, a transceiver and a processor; wherein the memory is configured to store computer programs; the transceiver is configured to transmit and receive data under control of the processor; the processor is configured to read the computer programs stored in the memory and perform the following operations:
transmitting to-be-woken-up cell priority information to a first network-side device, or receiving to-be-woken-up cell priority information transmitted by the first network-side device;
wherein the to-be-woken-up cell priority information is used by a terminal to select a target to-be-woken-up cell from a plurality of to-be-woken-up cells.

32. The device according to claim 31, wherein the processor is further configured to perform the following step:
receiving a first request message transmitted by a first network-side device, the first request message being used to request transmission of the to-be-woken-up cell priority information.

33. A processor-readable storage medium, the processor-readable storage medium storing a computer program, the computer program being operable to cause a processor to execute steps of the signal transmission method according to any one of claims 1 to 9, or execute steps of the signal transmission method according to any one of claims 10 to 13, or execute steps of the signal transmission method according to any one of claims 14 to 18.
